# NEUE EUROPÄISCHE PATENTSCHRIFT

(11) **EP 2 146 401 B2**
(45) Veröffentlichungstag und Bekanntmachung des Hinweises auf die Entscheidung über den Einspruch: **07.01.2015**
(45) Hinweis auf die Patenterteilung: 21.12.2011
(21) Anmeldenummer: 09009139.8
(22) Anmeldetag: 14.07.2009
(51) Int. Cl.: H01R 35/02, E06B 7/28, E05B 17/22

(54) **Flexibler Mehrkanal-Kabelübergang**
Flexible multi-channel cable transition
Passage de câble flexible à plusieurs canaux

(30) Priorität: 16.07.2008 DE 102008033311
(43) Veröffentlichungstag der Anmeldung: 20.01.2010
(73) Patentinhaber: Link GmbH, 35510 Butzbach-Ostheim (DE)
(72) Erfinder: Link, Daniel, 35510 Butzbach (DE)
(74) Vertreter: Tergau & Walkenhorst

(56) Entgegenhaltungen:
- EP-A1- 1 742 305
- DE-A1- 4 222 321
- DE-A1- 10 126 785
- DE-A1- 19 716 959
- DE-C1- 10 053 153
- DE-C1- 19 511 755
- DE-C2- 3 537 432
- DE-U1- 8 229 144

## Beschreibung

Die Erfindung betrifft eine Vorrichtung zum elektrischen Verbinden mehrerer, an einem ortsfesten ersten Träger ankommender Signalleitungen mit mehreren von einem gegenüber dem ersten Träger schwenkbaren, zweiten Träger abgehenden Signalleitungen, unter Verwendung eines trennbaren, sich zwischen den beiden Trägem erstreckenden flexiblen Verbindungskabels, nachfolgend kurz "Kabelübergang" genannt.

Aus DE 42 22 321 A1 ist eine Vorrichtung gemäß Gattungsbegriff des Anspruchs 1 bekannt, welche der elektrischen Verbindung zwischen Eingabe- und Anzeigeeinrichtungen am Armaturenbrett einerseits sowie Lautsprechern, Schaltern und Stellgliedern an einer Tür eines Kraftfahrzeugs andererseits dient, um die Lautsprecher und andere elektrische Verbraucher in der Fahrzeugtür mit Signalen zu versorgen. Ein im Armaturenbrett untergebrachtes Steuergerät enthält u.a. ein als Signalumsetzer dienendes Modem, welches über das flexible Verbindungskabel mit einem in der Tür als Teil eines sog. Türmoduls angeordneten Modem Signale austauscht. Hierzu werden die Melde- und Steuersignale in binärcodierter Form zusammen mit den NF-Audiosignalen für die Lautsprecher im Armaturenbrett-Modem einem Trägersignal aufmoduliert und das modulierte Trägersignal über einen dreipoligen Steckverbinder dem flexiblen Verbindungskabel zugeleitet. Das andere Ende des Verbindungskabels ist an das Tür-Modem angeschlossen. Dort wird das übertragene Trägersignal demoduliert, so dass den ursprünglichen Melde- und Steuersignalen entsprechende Signale entstehen, die den in der Tür befindlichen Schaltern und Stellgliedern zugeführt werden. Die demodulierten NF-Signale gelangen an die Lautsprecher. In Gegenrichtung erfolgt die Signalübertragung entsprechend. Das flexible Verbindungskabel hat drei Adern, nämlich für Masse, Stromversorgung und Signalübertragung.

Flexible Kabelübergänge werden vielfach als elektrisches Verbindungselement zwischen einem ortsfesten Träger, z.B. einem Türrahmen, und einem demgegenüber beweglichen, insbesondere schwenkbaren Träger, z.B. einem Türflügel, eingesetzt (s. DE 31 05 311 C2 ; DE 298 14 952 U1). Sie sind auch als trennbare Kabelübergänge in verschiedenen Ausführungsformen bekannt, (z.B. DE 94 16 940 U1 ; DE 100 53 153 C1 ; DE 101 26 785 A1 ; DE 10 2004 047 001 B4). Soll eine Vielzahl von Leitungen über einen Kabelübergang miteinander verbunden werden, so steht bei trennbaren Kabelübergängen die Enge im Bereich des Türfalzes der Unterbringung von größeren Steckverbindungen mit einer Vielzahl von Stift- bzw. Buchsenelementen entgegen. Man hat sich bisher durch den gleichzeitigen Einbau mehrerer, üblicherweise vier- bis siebenadriger Kabelübergänge längs der Rahmenkante geholfen. Außerdem beschränkt der verfügbare lichte Innendurchmesser des Schutzmantels die Anzahl der ohne Beeinträchtigung der Flexibilität durchleitbaren Leitungen.

Andererseits werden Räume und Gebäude in zunehmenden Maße mit Fernsteuer-, Kontroll- und Überwachungseinrichtungen ausgerüstet, welche an eine entsprechende Steuerzentrale angeschlossen werden müssen. Hierfür hat man bislang in den Wänden des Raumes Anschlussdosen für die Mess-, Steuer- und Eingabegeräte angebracht und mittels unter Putz verlegter Leitungen mit der Steuerzentrale verbunden. Für das Verlegen der Kabel und Anbringen der Gerätedosen sind, sofern keine vorgefertigten Installationswände vorhanden sind, umfangreiche und zeitraubende Installationsarbeiten erforderlich. Besonders schwierig wird es zumeist bei einer nachträglichen Erweiterung oder Umrüstung der Steuer- und Überwachungsanlage. Der Installationsaufwand lässt sich erheblich vermindern, wenn man zumindest einen Teil der Mess-, Steuer- oder Eingabegeräte nicht an einer Wand sondern an der Tür anbringt und über einen flexiblen Kabelübergang an eine vorverlegte, vieladrige Verbindungsleitung zur Steuerzentrale anschließt. An einer Tür lassen sich zusätzliche oder mit neuen Funktionen ausgestattete Mess-, Steuer- und Eingabegeräte wesentlich einfacher anbringen als an einer Wand. Im Extremfall kann man die Tür austauschen und durch eine entsprechend ausgestattete neue Tür ersetzen. Hierzu bedarf es aber entweder vieladriger oder mehrerer Kabelübergänge.

Eine Vorrichtung zum elektrischen Verbinden mehrerer Signalleitungen an zwei gegeneinander drehbarer Träger mit Signalumsetzern ist aus der Druckschrift EP 1 742 305 A1 bekannt. Das Dokument DE 3537432 C2 offenbart einen Kabelübergang gemäß dem Oberbegriff des Anspruchs 1.

Ausgehend von der aus DE 42 22 321 A1 bekannten Signalübertragungsanordnung besteht die im Anspruch 1 gekennzeichnete Erfindung darin, dass das Verbindungskabel zusammen mit der Befestigung seiner Enden am ersten bzw. zweiten Träger dienenden Halterungen einen Kabelübergang bildet und beide Mehrkanal-Signalumsetzer Bestandteil dieses Kabelübergangs sind. Die Signalumsetzer befinden sich also nicht wie bei DE 42 22 321 A1 Elektronikmodulen der beiden Träger (Armaturenbrett bzw. Tür) sondern sind integraler Bestandteil des Kabelübergangs und sind vorzugsweise in den Halterungen für die Enden des flexiblen Verbindungskabels untergebracht.

Die Erfindung schafft ein neues, eigenständig marktfähiges Produkt, nämlich einen Kabelübergang mit je einem integrierten Signalumsetzer zu beiden Seiten des flexiblen Verbindungskabels. Ein solcher Kabelübergang ist nicht nur zwischen Türflügel und Türrahmen oder an Fenstern sondern an beliebigen Trägem einsetzbar, welche relativ zueinander bewegbar, insbesonderen schwenkbar sind.

Dieser neue Kabelübergang ist für die Übertragung von einer Vielzahl beliebiger Signale ausgerüstet und dementsprechend vielseitig einsetzbar. Sein mechanischer Aufbau und sein Platzbedarf entsprechen dem eines herkömmlichen Kabelübergangs, so dass er sich auch zum Nachrüsten bereits vorhandener Anlagen eignet und leicht montierbar ist. Dies ist bei Sicherheitsanlagen zur Überwachung von Fenstern oder Türen besonders vorteilhaft.

Die Meß-, Steuer- und Überwachungssignale - nachfolgend kurz "Signale" genannt - werden am senderseitigen Ende des Kabelübergangs, z.B. am Türflügel, mittels eines ersten Mehrkanal-Signalumsetzers in ein gebündeltes Übertragungssignal umgesetzt, welches in eine einzelne, beispielsweise zweiadrige Leitung des flexiblen Verbindungskabels eingespeist wird. Auf der Empfangsseite, z.B. am Türrahmen, erzeugt der am dortigen Ende des Kabelübergangs vorgesehene zweite Mehrkanal-Signalumsetzer (Rückumsetzer) an seinen Ausgängen den ursprünglichen "Signalen" entsprechende Meß-, Steuer- oder Überwachungssignale, welche in herkömmlicher Weise ausgewertet und verarbeitet werden. In Gegenrichtung, d.h. für den Signalfluss vom Türrahmen zum Türflügel, können entweder die gleichen, in diesem Fall bidirektional arbeitenden Signalumsetzer oder ein zweites Umsetzerpaar eingesetzt werden. Gegebenenfalls kann dieser Signal-Rückfluß über eine zweite zweiadrige Leitung des Verbindungskabels geführt werden. Je nach Art der Signalübertragung zwischen den beiden Signalumsetzern, z.B. Signalbus mit Bus-Protokoll, Frequenzmultiplex, digitale Puls- oder Pulspaketübertragung, Transponderbetrieb oder nach einem sonstigen Übertragungsverfahren, sowie abhängig von der Art der Signalleitung, z.B. Draht oder Glasfaser, wird die Art der Signalumsetzer sowie die Anzahl der Signalleitungen ausgewählt.

In weiterer Ausgestaltung der Erfindung enthält das Verbindungskabel zusätzlich zu der mindestens einen Signalleitung eine Stromversorgungsleitung, über welche die am Türflügel angebrachten Meß-, Steuer- und Überwachungsgeräte vom Türrahmen her mit Energie versorgt werden. Aus der über die Versorgungsleitung zugeführten Spannung von z.B. 230V (WS) können auf der Empfangsseite, d.h. am Türflügel, unter Verwendung eines vorzugsweise in den Umsetzer integrierten Netzgerätes, Spannungswandlers oder - teilers bzw. Gleich- oder Wechselrichters mehrere unterschiedliche Versorgungsspannungen von beispielsweise 12V, 24V und 48V (GS) für die verschiedenen Geräte abgeleitet werden. Im einfachsten Fall umfasst das flexible Verbindungskabel nur zwei Adernpaare, nämlich eines für die gebündelte Signalübertragung und ein zweites zur Stromversorgung des ersten Umsetzers. Miniaturisierte, auch bidirektional arbeitende Signalumsetzer für die gleichzeitige Übertragung mehrerer, beispielsweise digitalisierter Signale über die gleiche Leitung gehören zum Stand der Technik. Sie werden für Telefon- und Telefaxverbindungen, für Kabelfernsehen, Fernsteuerungen und ähnliche Zwecke eingesetzt. Dabei ist zu berücksichtigen, dass im Hauptanwendungsgebiet von flexiblen Kabelübergängen, nämlich bei der Gebäudeüberwachung einerseits sowie bei der Steuerung von Fahrzeugschlössern und Motoren in Fahrzeugtüren andererseits, relativ niederfrequente Signale zu übertragen sind. Sollte die Kapazität eines einzigen Umsetzers und einer Einzelleitung nicht ausreichen, so bereitet es keine räumlichen Schwierigkeiten, in einem flexiblen Verbindungskabel mehrere Einzelleitungen bzw. Adernpaare für die Signalübertragung bereitzustellen und - wie erwähnt - zwei Umsetzer und zwei Rückumsetzer vorzusehen.

Die Erfindung sieht vor, dass an den Enden des flexiblen Verbindungskabels eine aus zwei Steckerteilen bestehende Steckverbindung vorgesehen ist. Dabei ist der Umsetzer jeweils in dem den Signalleitungen zugewandten Steckerteil untergebracht. Es handelt sich also um einen trennbaren Kabelübergang. Die Steckverbindungen erhöhen die Vielseitigkeit des Kabelübergangs und erleichtern dessen Einbau und Austausch. Außerdem schaffen sie Anschlussmöglichkeiten für die elektrische Überprüfung sowohl des Kabelübergangs als auch der an ihn angeschlossenen Signalquellen und Verbraucher. Dabei verringert die durch die Erfindung erzielte Reduzierung der Anzahl erforderlicher Kontakte, im Idealfall auf vier oder bei gemeinamer Masseleitung nur drei, den Platzbedarf für die Steckverbindung ganz erheblich.

Für Produktion und Lagerhaltung dieses neuen trennbaren Kabelübergangs ist es von Vorteil, dass die an den beiden Enden des Verbindungskabels angebrachten Steckerteile den gleichen konstruktiven Aufbau haben können, wie die entsprechenden Steckerteile eines Kabelübergangs ohne Umsetzer. Das flexible Verbindungskabel samt Schutzmantel und an den Kabelenden angebrachten Steckerteilen kann folglich sowohl für Kabelübergänge mit als auch solche ohne Umsetzer verwendet werden.

Vorteilhafte Ausgestaltungen und Weiterbildungen der Erfindung ergeben sich aus den Unteransprüchen sowie aus der nachfolgenden Erläuterung der Erfindung anhand in den Zeichnungen dargestellter Ausführungsbeispiele. Darin zeigt:
Fig.1
   als Wirkschaltbild schematisch den Aufbau des neuen Kabelübergangs beim Einsatz an einer Tür;
Fig. 2a
   das in den Falz eines Türrahmens oder eines Türflügels eingesetzte Steckerteil eines trennbaren Kabelübergangs mit Kontaktbuchsenhalter und Signalumsetzer;
Fig.2b
   eine Leiterplatine, welche die ankommenden Signalleitungen mit den Umsetzer- eingängen sowie die Umsetzerausgänge mit den Kontaktbuchsen verbindet;
Fig.3a
   das am flexiblen Verbindungskabel befestigte andere Steckerteil, welches die in diese Kontaktbuchsen passenden Kontaktstifte trägt;
Fig.3b
   eine zugehörige Leiterplatine, welche diese Kontaktstifte mit den Lötanschlüssen für das Verbindungskabel verbindet; und
Fig.3c
   eine Ansicht der Kontaktstiftseite des anderen Steckerteils.

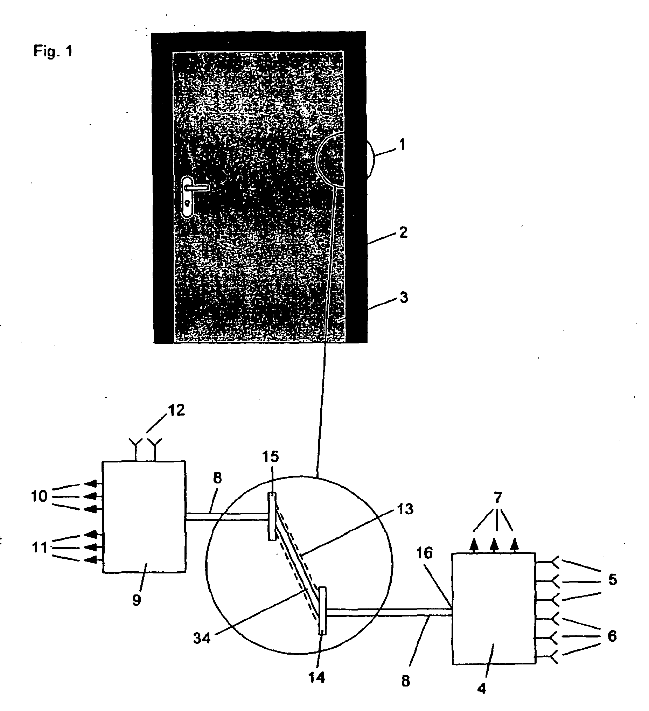

Fig.1 zeigt im oberen Teil eine Tür mit einem durch einen Kreis angedeuteten Kabelübergang 1 zwischen Türrahmen 2 und Türflügel 3. Am Türflügel befinden sich verschiedene, nicht eingezeichnete Signalgeber, welche beispielsweise den Schließzustand von Tür und Türschloß überwachen, mittels eines Fingerabdruckprüfgeräts oder einer Zahlentastatur die Zugangsberechtigung einer Person überprüfen, die Raumtemperatur messen, den Beleuchtungszustand des Raums feststellen, auf Rauchentwicklung oder übermäßige Feuchte ansprechen oder andere Signale erzeugen. Diese Meßsignale gelangen an die Signaleingänge eines am Türflügel 3 befestigten, z.B. in dessen Falz eingesetzten ersten Signalumsetzers 4, der im Beispiel mit drei digitalen Eingängen 5 sowie drei analogen Eingängen 6 ausgestattet ist. Außerdem liefert er an seinen Stromversorgungsausgängen 7 beispielsweise drei verschiedene Versorgungsgleichspannungen von 12V, 24V und 48V für die angeschlossenen, am Türflügel angebrachten Signalgeber. Der (tür-)flügelseitige erste Signalumsetzer 4 steht über eine den flexiblen Kabelübergang 1 durchsetzende Leitung 8 mit einem (tür-)rahmenseitigen zweiten Signalumsetzer 9 elektrisch in Verbindung. Zur Energieversorgung wird dem flügelseitigen ersten Umsetzer 4 über ein Adernpaar der Leitung 8 vom Türrahmen her eine Speisespannung von beispielsweise 230V (WS) oder 48V (GS) zugeführt. Die Leitung 8 umfasst im einfachsten Fall nur zwei Adernpaare, nämlich ein erstes Adernpaar als Bus-Datenleitung zur Signalübertragung sowie ein zweites Adernpaar zur Stromversorgung des ersten Umsetzers 4 und der an dessen Stromversorgungsausgänge 7 angeschlossenen Signalgeber. Bei Verwendung einer gemeinsamen Masseleitung für Signalübertragung und Stromversorgung reichen drei Adern. Im Prinzip könnten Datenübertragung und Gleichstromversorgung über ein einziges Adernpaar erfolgen. Eine andere Möglichkeit besteht darin, dass die Daten per Funk oder Infrarotstrahlung zwischen den beiden Umsetzern übertragen werden. Der erste Umsetzer 4 wandelt die an seinen Signaleingängen 5 bzw. 6 anstehenden Meßsignale in ein gebündeltes Übertragungssignal um, welches vom Umsetzer 4 über die Bus-Datenleitung der Leitung 8 zum zweiten Umsetzer 9, zuweilen Signal-Rückumsetzer genannt, gelangt. Im rahmenseitigen zweiten Signalumsetzer werden die über die Leitung 8 ankommenden Datensignale in den ursprünglichen Eingangs-Meßsignalen des ersten Umsetzers 4 entsprechende Signale rück-umgewandelt und im gezeigten Beispiel an drei digitalen Ausgängen 10 sowie drei analogen Ausgängen 11 für die Weiterverarbeitung bereitgestellt, z.B. einer Meß- und Überwachungszentrale zugeleitet. An zwei Stromversorgungseingängen 12 wird einerseits der rahmenseitige zweite Signalumsetzer 9 und andererseits über die erwähnte Stromversorgungsader(n) der Leitung 8 auch der flügelseitige erste Umsetzer 4 mit Energie versorgt. Der erste Umsetzer 4 erzeugt ferner, wie erwähnt, an seinen Stromversorgungsausgängen 7 mehrere unterschiedliche Speisespannungen für die am Türflügel 3 vorgesehenen Signalgeber. Hierfür könnte auch ein mit mehreren Ausgängen versehener oder einstellbarer Spannungswandler eingesetzt werde.

Im Zug der Leitung 8 liegt der flexible Kabelübergang 1, welcher die Strecke zwischen Türflügel 3 und Türrahmen 2 überbrückt. Sein Schutzmantel 13, üblicherweise eine eng gewickelte Schraubenfeder, umgibt das flexible Verbindungskabel 34 und ist mit seinem einen Ende 14 am Türflügel 3 sowie mit seinem anderen Ende 15 am Türrahmen 2 befestigt. Im einfachsten Fall ist die Leitung 8 eine durchgehende, vieradrige Leitung mit einem ersten Adernpaar als Bus-Datenleitung und einem zweiten Adernpaar für die Stromversorgung. Die Art der für die Bündelsignal-Übertragung benutzten Leitung 8 hängt im wesentlichen von der Arbeitsweise der Umsetzer 4 und 9 ab. Gibt der Umsetzer 4 das Datensignal als Modulation eines hochfrequenten Trägers aus, so empfiehlt es sich, als Datenleitung ein Koaxialkabel zu verwenden. Müssen besonders große Datenmengen übertragen werden, kann es sich lohnen, einen Lichtleiter einzusetzen und an seinen Enden je einen Optokoppler vorzusehen.

Bislang wurde die Signalübertragung von den am Türflügel 3 angebrachten Meßgeräten zum rahmenseitigen zweiten Umsetzer 9 beschrieben, der dann mit einer stationären Meldezentrale oder dergl. in Verbindung steht. Sollen auch in Gegenrichtung, d.h. von der Meldezentrale zu den am Türflügel 3 angeordneten Meßgeräten, Signale, z.B. Steuer-, Sollwert- oder Abfragesignale übertragen werden, so verwendet man vorzugsweise bidirektional arbeitende Signalumsetzer 4; 9. Die Steuersignale der Meldezentrale gelangen entweder über die dann auch als Eingänge verwendbaren Anschlüsse 10 und 11 oder über zusätzliche Eingänge an den zweiten Signalumsetzer 9, der sie umsetzt und an den ersten Signalumsetzer 4 überträgt. Dort werden sie in für die Meßgeräte geeignete Steuer-, Sollwert- oder Abfragesignale umgewandelt und über zugeordnete Ausgänge, z.B. die Anschlüsse 5 und 6 oder zusätzliche Ausgänge, den Meßgeräten des Türflügels 3 zugeleitet. Wie schon erwähnt, kann anstelle bidirektionaler Umsetzer ein zweites Umsetzerpaar und anstelle einer einzigen Signalübertragungsleitung für jede Signalflußrichtung eine gesonderte Leitung verwendet werden.

Als besonders montage- und wartungsfreundlich haben sich trennbare Kabelübergänge erwiesen.

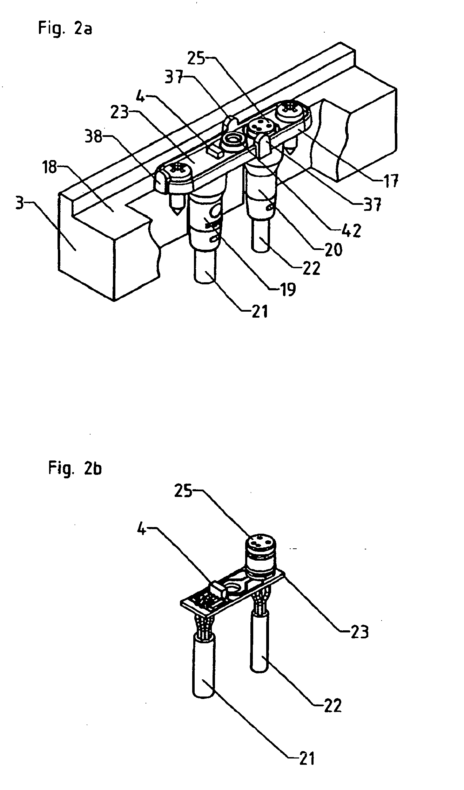

Die Leitung 8 kann an sich an jeder beliebigen Stelle, beispielsweise auch im Bereich des Kabelübergangs 1, trennbar und mit einer Steckverbindung versehen sein. Hierfür geeignete Konstruktionen von Kabelübergängen und Steckverbindungen sind bekannt (z.B. DE 10 053 153 C1 ; DE 101 26 785 A1 ; DE 10 2004 047 001 B4). Die Erfindung sieht deshalb vor, dass an den Enden der Verbindungsleitung des Kabelübergangs eine aus zwei Steckerteilen bestehende Steckverbindung vorgesehen ist. Gemäß der Erfindung ist an beiden Enden des flexiblen Verbindungskabels je ein Umsetzer in einer als Trennstelle dienenden Steckverbindung untergebracht. Da die Steckverbindungen an beiden Enden des flexiblen Verbindungskabels vorzugsweise identisch ausgebildet sind, ist in den Fig.2a bis 3c nur ein Ausführungbeispiel einer solchen Steckverbindung schematisch dargestellt.

Geht man davon aus, daß die Signalgeber am Türflügel 3 angebracht sind, so muß sich der erste Umsetzer 4 ebenfalls am Türflügel befinden, d.h. das den Umsetzer 4 aufweisende Steckerteil der Trennstelle am liegt Ausgang 16 des Umsetzers 4 zur Leitung 8. Fig.2a zeigt ein solches Steckerteil 17 in Form eines in den Falz 18 des Türflügels 3 eingesetzten Buchsenträgers. Dieser weist hier auf seiner Unterseite Anschlüsse 19 und 20 für zwei mehradrige Signalleitungen 21 bzw. 22 auf, welche von den Signalgebern kommen. Diese im einzelnen nicht dargestellten Anschlüsse können Steck- oder Lötanschlüsse sein und sind im Beispiel an einer aus Fig.2b ersichtlichen Leiterplatine 23 vorgesehen. Stattdessen können die Aderenden der beiden, vorzugsweise mit vorgegebenen Leitungslängen angebotenen, Signalleitungen 21 und 22 auch direkt an Lötflächen derjenigen Leiterbahnen auf der Platine 23 angelötet sein, welche diese Signalleitungen mit den Signaleingängen 5 bzw. 6 des ebenfalls von der Leiterplatine 23 getragenen Signalumsetzers 4 verbinden. Außer Leitungsadern für die Zufuhr von Meßsignalen sind zumindest in einer der Signalleitungen 21 und 22 oder in einer gesonderten Versorgungsleitung zwei die Versorgungsspannung für den ersten Signalgeber 4 liefernde Adern vorhanden, welche über die Leiterplatine 23 mit nicht eingezeichneten Stromversorgungeingängen 7 des Umsetzers 4 verbunden werden. Anstelle der gezeigten zwei Signalleitungsanschlüsse 19, 20 kann auch nur ein einziger Leitungsanschluß oder können mehr als zwei solcher Anschlüsse am Buchsenträger 17 vorgesehen und an den Umsetzer 4 angeschlossen sein. Nimmt man im einfachsten Fall an, daß die Leitung 8 nur eine zweiadrige Busdatenleitung sowie eine z.B. zweiadrige Stromversorgungsleitung umfaßt, so braucht die an den Ausgang 16 des Umsetzers 4 anzuschließende Leitung 8 nur vier Adern und demzufolge der Buchsensockel 25 nur vier Steckerbuchsen aufzuweisen bzw. bei gemeinsamer Masseleitung nur drei.

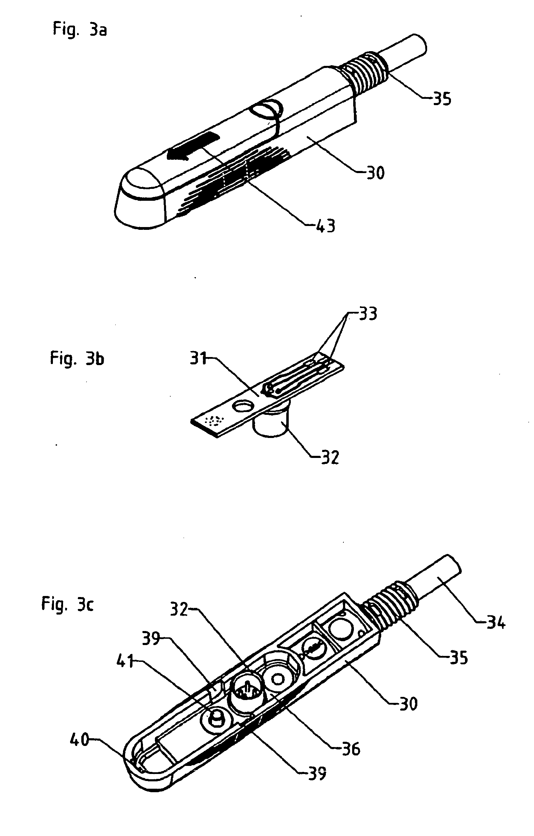

Als Gegenstück zum in Fig.2a gezeigten Buchsenträger 17 ist in Fig.3a bis 3c das andere Steckerteil, nämlich ein zugehöriger Kontaktstiftträger 30 wiedergegeben, und zwar in Fig.3a seine Deckseite und in Fig.3c seine Unterseite. Er besteht aus einem Steckergehäuse 30 mit Leiterplatine 31, welche einen dem Buchsensockel 25 entsprechenden vierpoligen Stiftsockel 32 trägt. Die Leiterbahnen auf der Platine 31 verbinden die Kontaktstifte mit Lötanschlüssen 33 für die Adern des flexiblen Verbindungskabels 34 des Kabelübergangs. Dieses Verbindungskabel ist von einem Schutzmantel 13, z.B. einer in Fig.3 nicht dargestellten, eng gewickelten Schraubenfeder umgeben und wird durch einen Schraubstutzen 35 in das Innere des Steckergehäuses 30 eingeführt. Auf das Außengewinde des Stutzens 35 wird das Ende der Schraubenfeder aufgeschraubt. Der äußere Umfang des zylindrischen Buchsensockels 25 ist mit Hilfe eines O-Rings gegen den Stiftsockel 32 abgedichtet. Die Leiterplatine 31 ist, wie Fig.3b zeigt, unterhalb einer Kammer 36 des Steckergehäuses 30 angeordnet, deren Form dem Umriß des Buchsenhalters 17 angepaßt ist. Zwei seitliche Laschen 37 und eine frontale Lasche 38 am Buchsenhalter 17 (vgl.Fig.2a) gewährleisten im Zusammenwirken mit zwei seitlichen Vertiefungen 39 sowie einer frontalen Vertiefung 40 in der Wand der Kammer 36 (vgl. Fig.3c) ein verpolungssicheres Aufsetzen des Steckergehäuses 30 auf den Buchsenhalter 17. Der Stiftsockel 32 wird samt Platine 31 mit Kunststoff umspritzt. Diese hat ein Loch, durch das hindurch die Platine 31 samt Steckergehäuse 30 mittels einer Schraube 41 (vgl.Fig.3c) an einer vom Boden des Buchsenhalters 17 gehaltenen Gewindebuchse 42 (vgl.Fig.2a) festgeschraubt wird. Schließlich läßt sich der Schraubenkopf mit einer auf das Steckergehäuse 30 aufschiebbaren Kappe 43 abdecken.

Im Rahmen der Erfindung bestehen zahlreiche Möglichkeiten für Abwandlungen der gezeigten Ausführungsform. Buchsensockel 25 und Stiftsockel 32 können ihre Zuordnung zu Buchsenhalter 17 und Steckergehäuse 30 bzw. Leiterplatine 23 und 31 vertauschen. Der Begriff "Sockel" steht hier für jegliche Art von Kontaktträgern. Anstelle von Stift-Buchsenkontakten können auch andere Kontakte wie Messer- oder Federkontakte eingesetzt werden, wenn der Einbauraum dies erlaubt. Statt runder Kontaktsockel kann man bei besonders schmaler Einbaufläche langgestreckte oder ovale Kontaktträger verwenden, die beispielsweise als ein- oder doppelreihige Kontaktleiste ausgebildet sind. Die im Ausführungsbeispiel gezeigte runde Form ermöglicht die Verwendung von Bauteilen, die schon bisher für Kabelübergänge marktgängig sind.

## Patentansprüche

1. Kabelübergang zum elektrischen Verbinden mehrerer, an einem ortsfesten ersten Träger ankommender Signalleitungen mit mehreren von einem, gegenüber dem ersten Träger schwenkbaren, zweiten Träger abgehenden Signalleitungen, unter Verwendung
a) eines sich zwischen den beiden Trägern erstreckenden flexiblen Verbindungskabels;
b) eines ersten Mehrkanal-Signalumsetzers, welcher auf den ankommenden Signalleitungen eintreffende Mess- und Überwachungssignale in ein über eine Einzelleitung des Verbindungskabels übertragbares gebündeltes Übertragungssignal umwandelt und dessen Signalausgang mit dem einen Ende des flexiblen Verbindungskabels in Verbindung steht;
c) eines als Signal-Rückumsetzer dienenden zweiten Signalumsetzers, der mit dem anderen Ende des Verbindungskabels in Verbindung steht und an seinen Ausgängen den ursprünglichen Mess- oder Überwachungssignalen entsprechende Signale liefert;
d) das Verbindungskabel (34) zusammen mit der Befestigung seiner Enden (14, 15) am ersten bzw. zweiten Träger dienenden Halterungen (17) einen Kabelübergang bildet und
e) die beiden Mehrkanal-Signalumsetzer (4, 9) Bestandteil dieses Kabelübergangs sind,
**dadurch gekennzeichnet, dass**
f) an den Enden des flexiblen Verbindungskabels jeweils eine aus einem dem Verbindungskabel (13) zugewandten Steckerteil (30) und einer den Signalleitungen (21, 22) zugewandten Halterung (17) bestehende Steckverbindung vorgesehen ist,
g) und dass die Signalumsetzer (4, 9) jeweils in den den Signalleitungen (21, 22) zugewandten Halterungen (17) angeordnet sind.

2. Kabelübergang nach Anspruch 1, **dadurch gekennzeichnet, dass** eine an der einen Halterung (17) ankommende Spannungsversorgungsleitung (12) über Adern des flexiblen Verbindungskabels (34) an einen Wandler angeschlossen ist, welcher an oder in der anderen Halterung angeordnet ist und zumindest eine Speisespannung für den anderen Umsetzer sowie an diesen angeschlossene Signalgeber liefert.

3. Kabelübergang nach Anspruch 2, **dadurch gekennzeichnet, dass** an der anderen Halterung mehrere Anschlüsse für unterschiedliche, gegebenenfalls einstellbare Speisespannungen vorgesehen sind.

4. Kabelübergang nach Anspruch 1 mit je einer Steckverbindung an beiden Enden des Verbindungskabels (34), **dadurch gekennzeichnet, dass**
h) der erste Signalumsetzer (4) in der den ankommenden Signalleitungen (21,22) zugewandten Halterung (17) der ersten Steckverbindung und
i) der zweite Signalumsetzer (9) in der den abgehenden Signalleitungen (21,22) zugewandten Halterung (17) einer am anderen Ende des flexiblen Verbindungskabels (34) vorgesehenen zweiten Steckverbindung angeordnet ist.

5. Kabelübergang (1) nach einem der Ansprüche 1 bis 4 **dadurch gekennzeichnet, dass** die Signalumsetzer (4, 9) als bidirektional arbeitende Umsetzer ausgebildet sind.

6. Kabelübergang nach Anspruch 5, **dadurch gekennzeichnet dass** die Signalübertragung zwischen den beiden Signalumsetzer (4, 9) unter Anwendung eines Bus-Protokolls erfolgt.

7. Kabelübergang nach einem der Ansprüche 1 bis 6, **dadurch gekennzeichnet, dass** die Einzelleitung ein Adernpaar ist.

8. Kabelübergang nach einem der Ansprüche 1 bis 6, **dadurch gekennzeichnet, dass** die Einzelleitung ein Koaxialkabel ist.

9. Kabelübergang nach einem der Ansprüche 1 bis 6, **dadurch gekennzeichnet, dass** die Einzelleitung wenigstens eine optische Faser aufweist.

10. Kabelübergang nach einem der Ansprüche 1 bis 9, **dadurch gekennzeichnet, dass** die den Umsetzer (4, 9) enthaltende Halterung (17) ferner Steckanschlüsse (19, 20) zum Anschliessen wenigstens einer mehradrigen SignalAnschlussleitung (21, 22) aufweist.

11. Kabelübergang nach einem der Ansprüche 1 bis 10, **dadurch gekennzeichnet, dass** an die den Umsetzer (4;9) enthaltende Halterung (17) wenigstens eine Signalanschlussleitung (21, 22) vorgegebener Länge fest angeschlossen ist.

12. Kabelübergang nach Anspruch 10 oder 11, **dadurch gekennzeichnet, dass** die den Umsetzer (4) aufweisende Halterung (17) zur Einspeisung einer Vielzahl von Mess- oder Überwachungssignalen mehrere Signalleitungsanschlüsse (19, 20) für jeweils eine mehradrige Anschlussleitung (21, 22) aufweist.

## Claims

1. A cable access point for electrically connecting several signal lines, which come in at a stationary first carrier, with several signal lines outgoing from a second carrier which is pivotable relative to the first carrier,
a) using a flexible connection cable extending between the two carriers,
b) using a first multichannel signal converter, which converts measuring and monitoring signals arriving on the incoming signal lines into a bundled transmission signal which can be transmitted via a single conductor of the connection cable and whose signal output is in connection with one end of the flexible connection cable,
c) using a second signal converter, serving as a signal re-converter, which is in connection with the other end of the connection cable and supplies on its outputs signals which correspond to the original measuring and monitoring signals,
d) wherein the connection cable (34), together with holders (17) serving for fastening its ends (14, 15) to the first and second carriers, forms a cable access point, and
e) wherein the two multichannel signal converters (4, 9) are a component part of said cable access point,
**characterized in that**
f) on each of the ends of the flexible connection cable, a plug-in connection is provided, which consists of a plug part (30) facing towards the connection cable (13) and a holder (17) facing towards the signal lines (21, 22),
g) and the signal converters (4, 9) are arranged in each case in the holders (17) facing towards the signal lines (21, 22).

2. The cable access point of claim 1, **characterized in that** a voltage-supply line (12) incoming at one of the holders (17) is connected, via wires of the flexible connection cable (34), to a transducer, which is arranged on or in the other holder and supplies at least one supply voltage for the other converter as well as for any signal transmitters connected thereto.

3. The cable access point of claim 2, **characterized in that** several connectors for different, possibly adjustable, supply voltages are provided on the other holder.

4. The cable access point of claim 1, having one plug-in connection on each of the two ends of the connection cable (34), **characterized in that**
h) the first signal converter (4) is arranged in the holder (17) facing towards the incoming signal lines (21, 22) of the first plug-in connection, and
i) the second signal converter (9) is arranged in the holder (17) facing towards the outgoing signal lines (21, 22) of a second plug-in connection provided on the other end of the flexible connection cable (34).

5. The cable access point of any of claims 1 to 4, **characterized in that** the signal converters (4, 9) are designed as bidirectionally working converters.

6. The cable access point of claim 5, **characterized in that** signal transmission between the two signal converters (4, 9) is effected using a bus protocol.

7. The cable access point of any of claims 1 to 6, **characterized in that** the single conductor is a pair of wires.

8. The cable access point of any of claims 1 to 6, **characterized in that** the single conductor is a coaxial cable.

9. The cable access point of any of claims 1 to 6, **characterized in that** the single conductor includes at least one optical fiber.

10. The cable access point of any of claims 1 to 9, **characterized in that** the holder (17) containing the converter (4, 9) also includes plug-in connectors (19, 20) for connecting at least one multiwire signal connection line (21, 22).

11. The cable access point of any of claims 1 to 10, **characterized in that** at least one signal connection line (21, 22) of a predefined length is firmly connected to the holder (17) containing the converter (4, 9).

12. The cable access point of claim 10 or 11, **characterized in that** the holder (17) containing the converter (4) includes several signal-line connectors (19, 20), each for one multiwire connection line (21, 22), for feeding a multitude of measuring or monitoring signals.

## Revendications

1. Point d'accès de câble pour connecter électriquement plusieurs lignes de signalisation entrant à un premier porteur stationnaire avec plusieurs lignes de signalisation sortant d'un second porteur pivotable relativement au premier porteur,
a) en utilisant un câble de connexion flexible s'étendant entre les deux porteurs,
b) en utilisant un premier convertisseur de signaux à canaux multiples qui convertit des signaux de mesure et de surveillance qui arrivent sur les lignes de signalisation d'entrée, dans un signal de transmission en faisceau qui peut être transmis par un conducteur simple du câble de connexion et dont la sortie de signaux est en connexion avec un bout du câble de connexion flexible,
c) en utilisant un second convertisseur de signaux, servant de reconvertisseur de signaux, qui est en connexion avec l'autre bout du câble de connexion et fournit à ses sorties des signaux qui correspondent aux signaux originaux de mesure et de surveillance,
d) dans lequel le câble de connexion (34) forme, avec des supports (17) servant à fixer ses bouts (14, 15) aux premier et second porteurs, un point d'accès de câble, et
e) dans lequel les deux convertisseurs de signaux (4, 9) à canaux multiples sont une composante du dit point d'accès de câble,
**caractérisé en ce que**
f) à chaque bout du câble de connexion flexible est prévu un raccordement à fiches se composant d'une pièce de fiche mâle (30) en regard du câble de connexion flexible (13) et un support (17) en regard des lignes de signalisation (21, 22),
g) et les convertisseurs de signaux (4, 9) sont disposés à chaque fois dans les supports (17) en regard des lignes de signalisation (21, 22).

2. Point d'accès de câble selon la revendication 1, **caractérisé en ce qu'**une ligne d'alimentation en tension (12) arrivant à un des supports (17) est connectée, par des fils du câble de connexion flexible (34), à un transducteur qui est disposé sur ou dans l'autre support et fournit au moins une tension d'alimentation pour l'autre convertisseur ainsi que pour des transmetteurs de signaux y connectés.

3. Point d'accès de câble selon la revendication 2, **caractérisé en ce que** plusieurs raccords sont prévus sur l'autre support, pour des tensions d'alimentation différentes et éventuellement réglables.

4. Point d'accès de câble selon la revendication 1, ayant un raccordement à fiches à chacun des deux bouts du câble de connexion flexible (34), **caractérisé en ce que**
h) le premier convertisseur de signaux (4) est disposé dans le support (17) en regard des lignes de signalisation (21, 22) arrivantes, du premier raccordement à fiches, et
i) le second convertisseur de signaux (9) est disposé dans le support (17) en regard des lignes de signalisation (21, 22) sortantes, d'un raccordement à fiches prévu à l'autre bout du câble de connexion flexible (34).

5. Point d'accès de câble selon l'une quelconque des revendications 1 à 4, **caractérisé en ce que** les convertisseurs de signaux (4, 9) sont conçus comme convertisseurs fonctionnant bidirectionnellement.

6. Point d'accès de câble selon la revendication 5, **caractérisé en ce que** la transmission de signaux entre les deux convertisseurs de signaux (4, 9) s'effectue en utilisant un protocole de bus.

7. Point d'accès de câble selon l'une quelconque des revendications 1 à 6, **caractérisé en ce que** le conducteur simple est une paire de fils.

8. Point d'accès de câble selon l'une quelconque des revendications 1 à 6, **caractérisé en ce que** le conducteur simple est un câble coaxial.

9. Point d'accès de câble selon l'une quelconque des revendications 1 à 6, **caractérisé en ce que** le conducteur simple comprend au moins une fibre optique.

10. Point d'accès de câble selon l'une quelconque des revendications 1 à 9, **caractérisé en ce que** le support (17) contenant le convertisseur (4, 9) comprend en outre des raccords à fiche (19, 20) pour connecter au moins une ligne de raccordement de signaux multifilaire (21, 22).

11. Point d'accès de câble selon l'une quelconque des revendications 1 à 10, **caractérisé en ce qu'**au moins une ligne de raccordement de signaux (21, 22) d'une longueur prédéfinie est connectée fermement au support (17) contenant le convertisseur (4, 9).

12. Point d'accès de câble selon la revendication 10 ou 11, **caractérisé en ce que** le support (17) contenant le convertisseur (4) comprend plusieurs raccords (19, 20) de ligne de signaux, chacun pour une ligne de raccordement multifilaire (21, 22), pour alimenter une multiplicité de signaux de mesure ou de surveillance.
